# EUROPEAN PATENT APPLICATION

(11) **EP 4 760 496 A1**
(43) Date of publication of application: **17.06.2026**
(21) Application number: 25218037.7
(22) Date of filing: 24.11.2025
(51) Int. Cl.: G06F 9/445, G06F 8/65

(54) **A METHOD TO DO DYNAMIC LOADING ON AN MICROCONTROLLER UNIT**

(30) Priority: 16.12.2024 CN 202411853980
(71) Applicant: NXP B.V., 5656 AG Eindhoven (NL)
(72) Inventor: Xu, Peng, 5656AG Eindhoven (NL); Song, Yan, 5656AG Eindhoven (NL); Zhang, Yan, 5656AG Eindhoven (NL)
(74) Representative: Colaiuda, Antonella

(57) **Abstract**

A method is provided which enables dynamic loading to be performed on an MCU.

## Description

### FIELD

The invention relates to a method and system. Particularly, but not exclusively, the invention relates to a method to do dynamic loading on an microcontroller unit (MCU).

### BACKGROUND

Integrated development environments are often used to enable programmers to develop software code to be used on devices such as, for example, microcontroller units. They provide many useful tools such as, for example, source code editors, automation tools and debuggers.

One of the problems with the use of specific integrated development environments is the compatibility between compilers, especially between applications and the firmware for a device.

Aspects and embodiments were conceived with the foregoing in mind.

### SUMMARY

Aspects may relate to the configuration of firmware for use in a microcontroller unit.

Viewed from a first aspect, there is provided a computer-implemented method which may enable the configuring of firmware for use in a microcontroller unit. The method may be implemented using one or more computing devices. The microcontroller may, for example, be utilised for training and implementing one or more neural networks. The one or more computing devices may comprise one or more microcontroller units The method may comprise identifying firmware associated with a microcontroller unit. The method may comprise identifying the address of the identified firmware. The method may comprise linking the identified firmware with at least one different address from the identified address. The method may comprise determining a first image of the identified firmware based on the identified address and generate a second image of the identified firmware based on the at least one different address. The method may comprise comparing the first image of the identified firmware and the second image of the identified firmware to identify the relocation entry point for the firmware. The method may further comprise using an image of the firmware during execution of an application.

A method in accordance with the first aspect makes firmware associated with a microcontroller unit independent of development environments and compilers. This expands the usability of the firmware and increases the configurability of the microcontroller.

Optionally, the method further comprises identifying the address of the identified firmware based on a call from an application to initialise the microcontroller unit.

Optionally, wherein the call from the application is responsive to a power-on-reset operation on the microcontroller unit.

Optionally, wherein linking the identified firmware with at least one different address from the identified address comprises modifying the link-script of the firmware to link to the different address.

Optionally, wherein comparing the first and second images of the identified firmware comprises identifying differences in binary components associated with the first and second images.

Optionally, wherein the identification of differences in the binary components associated with the first and second images comprises performing a binary comparison.

Optionally, wherein the relocation entry point for the firmware is stored in association with the microcontroller component.

Optionally, wherein the relocation entry point is used at run time to execute the firmware.

Optionally, wherein, upon execution of the firmware, a stack pointer associated with the firmware is reset.

Optionally, wherein the reset of the stack pointer is associated with a preset stack pointer value.

Optionally, wherein the firmware is allocated to the different address based on user input.

Optionally, wherein the firmware is allocated to the different address based on use of a different compiler from the one originally intended for use by the application.

There may also be provided a non-transitory computer readable storage medium having stored thereon executable instructions that, as a result of being executed by a processor of a computer system, cause the computer system to at least perform the first aspect.

There may also be provided a system configured to implement the first aspect.

There may also be provided a processing resource comprising a processor and memory including executable instructions that, as a result of execution by the processor, causes the reader to perform the method of the first aspect.

There may also be provided a microcontroller unit configured in accordance with the method of the first aspect.

### DESCRIPTION

An embodiment will now be described by way of example only and with reference to the following drawings in which:
Figure 1 illustrates a process of configuring firmware for use by a microcontroller unit; and

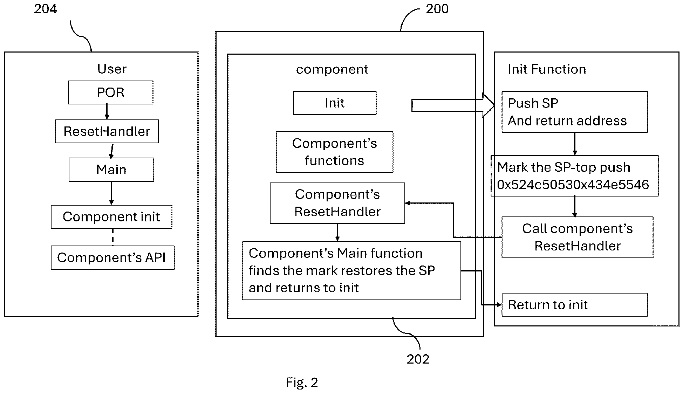

Figure 2 illustrates a schematic of the microcontroller unit and is interaction with a user and the initialization of firmware for the microcontroller unit.

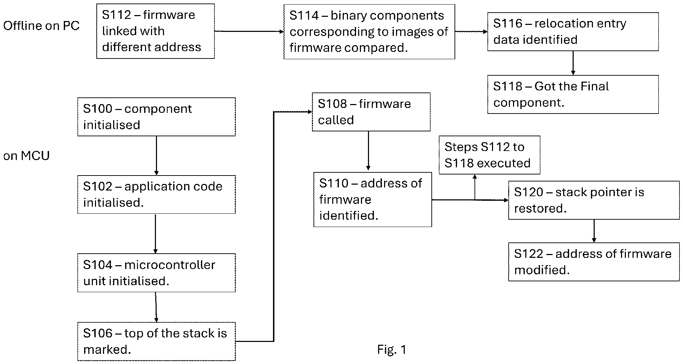

We now illustrate, with reference to Figure 1, a method which can be used to configure firmware for use by a microcontroller unit or other embedded computing device.

In a step S100, a user initializes a component 202 of a microcontroller unit 200 with a power-on-reset (POR) operation via a computing device 204 which is in communication with the microcontroller unit 200. This generates a call to the reset handler of the computing device 204 and initializes its firmware, i.e. the firmware of the computing device 204. This may be part of a project development operation in an IDE. The binary component of the project may include code to mark the stack pointer or the top of the stack pointer or it may include code identifying an address where the user may wish to re-allocate the firmware image.

If the binary component has already been compiled then it can be used in any IDE provided the target platform is the same, i.e. the processor and the instruction set are identical. In order to use the binary component it just needs to be placed in memory.

On creation of the project, the function APIs are exported to a virtual method table.

In a step S102, the user initializes the application code they wish to run on the microcontroller unit 200. This initialises the microcontroller unit in a step S104.

The initialization of the microcontroller causes the initialization of the stack pointer and the stack pointer is pushed to the top of the stack in the allocated memory. The initialization of the microcontroller also stores the return address of the initialization function of the microcontroller 200. The user who is developing the application may include an "incbin" command which includes a binary file in the project when it is built.

In a step S106, the top of the stack is marked with an address specified by the component 202, e.g. "0x524c50530x434e5546".

In a step S108, the firmware of the component 202 is called with a call to the reset handler of the component. This enables the firmware of the component 202 to be identified as the reset handler is part of the firmware.

In a step S110, we identify the address of the firmware.

In a step S112, on a separate computing device (from the component 202), we link the firmware with a different address by applying a different link address. This creates two images of the firmware, i.e. a first image and a second image which each have a different link address. Each image corresponding to a binary of the firmware. The separate computing device may be computing device 204. Steps S100 to S110 are implemented on or using the component 202.

In a step S114, on the separate computing device, the binary components corresponding to each of the first and second images of the firmware are compared, e.g. using a binary comparison, to identify where they are different.

The difference between the two images corresponds to the relocation entry of the code, the identification of which corresponds to step S116. This identifies the relocation entry. This is also implemented on the separate computing device. This information allows the image to hold the information for the firmware's program image. That is to say, provided it can be determined, the firmware can be deployed using any allocated address, i.e. it becomes independent of a specific integrated development environment (IDE) and a compiler corresponding to that specific integrated development environment.

By making the firmware independent of a specific IDE, the binary corresponding to the image of the firmware can be debugged. By identifying the relocation entry of the firmware, the corresponding component 202 is relocatable at run-time on the microcontroller unit.

The application may then be executed using an IDE-independent version of the firmware which means that the execution is not limited to a specific IDE.

That is to say, following on from steps S112 to S118, the binary component is obtained. This binary component is IDE independent and not limited to a specific IDE.

After the relocation entry data has been identified, the stack pointer of the firmware is restored on the microcontroller unit 200. This is step S120.

To complete the process, the components initialization code can then be modified in the IDE. The address of the firmware can be reset to the original address or the relocation entry can be stored to identify a position in the image where the firmware is relocatable to enable the firmware to be located at run-time on the microcontroller unit 200. This is step S122.

Steps S120 to S122 are implemented on the microcontroller unit 200.

The user may want to relocate the firmware if they are performing a reallocation to perform a dynamic memory allocation inside the application. This will enable the code to be re-allocated.

As the firmware can be relocated, using the relocation entry data, we can make firmware independent of the IDE and, in turn, enables dynamic loading to be performed as it is compiler independent and IDE independent.

In summary, the described embodiment provides the following advantages:
- A debugable binary (of the firmware), making the corresponding component integrated;
- The component obtains the relocation entry data, which means the firmware is relocatable at run-time;
- There is no requirement to know executable and linked format (ELF) information;
- Global variables are provided inside the component and so can support their initialization;
- The firmware is IDE-less which means the application can be made by any IDE and used by any IDE.

It should be noted that the above-mentioned aspects and embodiments illustrate rather than limit the disclosure, and that those skilled in the art will be capable of designing many alternative embodiments without departing from the scope of the disclosure as defined by the appended claims. In the claims, any reference signs placed in parentheses shall not be construed as limiting the claims. The word "comprising" and "comprises", and the like, does not exclude the presence of elements or steps other than those listed in any claim or the specification as a whole. In the present specification, "comprises" means "includes or consists of" and "comprising" means "including or consisting of". The singular reference of an element does not exclude the plural reference of such elements and vice-versa. The disclosure may be implemented by means of hardware comprising several distinct elements, and by means of a suitably programmed computer. In a device claim enumerating several means, several of these means may be embodied by one and the same item of hardware. The mere fact that certain measures are recited in mutually different dependent claims does not indicate that a combination of these measures cannot be used to advantage.

## Claims

1. A computer-implemented method of configuring firmware for use in a microcontroller unit, the method comprising:
identifying firmware associated with a microcontroller unit;
identify the address of the identified firmware;
link the identified firmware with at least one different address from the identified address;
determine a first image of the identified firmware based on the identified address and generate a second image of the identified firmware based on the at least one different address;
compare the first image of the identified firmware and the second image of the identified firmware to identify the relocation entry point for the firmware;
use an image of the firmware during execution of an application.

2. A method according to Claim 1, wherein the method further comprises identifying the address of the identified firmware based on a call from an application to initialise the microcontroller unit.

3. A method according to Claim 1, wherein the call from the application is responsive to a power-on-reset operation on the microcontroller unit.

4. A method according to Claim 1, wherein linking the identified firmware with at least one different address from the identified address comprises modifying the link-script of the firmware to link to the different address.

5. A method according to Claim 1 wherein comparing the first and second images of the identified firmware comprises identifying differences in binary components associated with the first and second images.

6. A method according to Claim 5, wherein the identification of differences in the binary components associated with the first and second images comprises performing a binary comparison.

7. A method according to Claim 1, wherein the relocation entry point for the firmware is stored in association with the microcontroller component.

8. A method according to Claim 1, wherein the relocation entry point is used at run time to execute the firmware.

9. A method according to Claim 1, wherein, upon execution of the firmware, a stack pointer associated with the firmware is reset.

10. A method according to Claim 8, wherein the reset of the stack pointer is associated with a preset stack pointer value.

11. A method according to Claim 1, wherein the firmware is allocated to the different address based on user input.

12. A method according to Claim 1, wherein the firmware is allocated to the different address based on use of a different compiler from the one originally intended for use by the application.

13. A non-transitory computer readable storage medium having stored thereon executable instructions that, as a result of being executed by a processor of a computer system, cause the computer system to at least perform the method of any one of claims 1 to 12.

14. A system configured to implement the method of Claims 1 to 12.

15. A processing resource comprising a processor and memory including executable instructions that, as a result of execution by the processor, causes the reader to perform the method of Claims 1 to 12.
